# EUROPÄISCHE PATENTSCHRIFT

(11) **EP 0 673 329 B1**
(45) Veröffentlichungstag und Bekanntmachung des Hinweises auf die Patenterteilung: **30.07.1997**
(21) Anmeldenummer: 94901757.8
(22) Anmeldetag: 13.12.1993
(51) Int. Cl.: B62J 9/00, A45F 4/02

(54) **BEFESTIGUNGSVORRICHTUNG**
FASTENING DEVICE
DISPOSITIF DE FIXATION

(30) Priorität: 15.12.1992 DE 4242211
(43) Veröffentlichungstag der Anmeldung: 27.09.1995
(73) Patentinhaber: NUTTO, Uwe, 79100 Freiburg (DE)
(72) Erfinder: NUTTO, Uwe, 79100 Freiburg (DE)
(74) Vertreter: Schmitt, Hans, Dipl.-Ing.
(86) Internationale Anmeldenummer: DE9301195
(87) Internationale Veröffentlichungsnummer: WO9413526

(56) Entgegenhaltungen:
- DE-A- 3 618 611
- US-A- 4 433 802
- US-A- 4 491 258

## Beschreibung

Die Erfindung betrifft Packtaschen mit einer Befestigungsvorrichtung für die alternative Fixierung der Packtaschen an einem Fahrrad oder für die gegenseitige Fixierung der Packtaschen zur Zusammenstellung eines Rucksackes.

Aus der US-PS 4 491 258 sind dreifächrige Packtaschen bekannt, die durch Verstärkungsleisten in einer Zusammenstellung zu einem Rucksack aussteifbar sind. Am Fahrrad befestigt sollen dieselben Verstärkungsleisten ein unkontrolliertes In-die-Speichen-Schlagen der Packtaschen während der Fahrt verhindern.

Bei einer Verwendung der bekannten Packtaschen als Fahrradpacktaschen werden diese über am Fahrrad befindliche Gepäckträger gelegt, so daß zwei der drei Packtaschenfächer einer Packtasche neben dem Hinter- bzw. neben dem Vorderrad herabhängen. Zwei kleinere Vorderradpacktaschen sind durch einen teilbaren Reißverschluß, durch Druckknöpfe und durch elastische Spannschnüre miteinander zu einer Einheit zu verbinden, bevor sie auf den Vorderradgepäckträger gelegt werden. Die Spannschnüre sind dann ihrerseits durch Haken an den Gepäckträgerstreben befestigbar. Die größere Packtasche ist für eine Befestigung am Hinterradgepäckträger vorgesehen und wird mit Hilfe von Spannriemen an den Gepäckträgerstreben oder am Fahrradrahmen fixiert.

Bei einer Zusammenstellung der drei Packtaschen zu einem Rucksack werden diese zunächst nebeneinander gelegt, wobei die größere Hinterradpacktasche zwischen den beiden dann geteilten Vorderradpacktaschen angeordnet ist. Die drei Packtaschen werden durch verbinden entsprechender Reißverschlüsse und Druckknöpfe miteinander verbunden. Zur Aussteifung des so zusammengesetzten Rucksackes werden die Verstärkungsleisten in entsprechende, auf der Rückseite der Hinterradpacktasche vorgesehene Führungsschlitze eingeführt Um dem Rucksack insgesamt eine größere Formstabilität zu verleihen, sind mehrere Spannriemen vorgesehen, die den aus den Packtaschen zusammengestellten Rucksack sowohl in Längsrichtung als auch in Querrichtung umschließen.

Auch wenn mit Hilfe der bekannten Befestigungsvorrichtungen ein Transport der Packtaschen am Fahrrad auf gut ausgebauten Straßen zufriedenstellend durchführbar ist, bietet diese Befestigungsart bei Fahrten auf schlechter Wegstrecke, insbesondere bei Fahrten im Gelände, keine ausreichende Befestigung der mitgeführten Packtaschen. Durch die auftretenden Erschütterungen können beladene Packtaschen aufgrund ihrer Massenträgheit verrutschen. Insbesondere bei Kurvenfahrten oder bei Fahretn im Gelände ist dies oftmals Ursache für Stürze. Bei höheren Belastungen sind die Spannschnüre und -riemen zudem so hohen Belastungen ausgesetzt, daß sie oftmals reißen oder daß die Nähte, mit der die Riemen am Packsack angenäht sind, aufreißen.

Darüber hinaus erweist sich die Verwendung von Gepäckträgern bei einer Beförderung des mit Packtaschen beladenen Fahrrades als nachteilig, da aus Platzgründen oftmals die Laufräder vom Fahrrad entfernt werden müssen. Dennoch sind die am Fahrradrahmen verbleibenden Gepäckträger hinderlich und zudem beschädigungsgefährdet. Ein Entfernen der Gepäckträger vom Fahrrad ist umständlich, zumal ein Radfahrer dann neben den Packtaschen auch noch die demontierten Gepäckträger von Hand tragen muß.

Aus der US-PS 4 433 802 ist eine Packtaschen-Rucksack-Vorrichtung bekannt, die einen vom Fahrrad demontierbaren Gepäckträger aufweist, der bei der Zusammenstellung von zwei mitgeführten Packtaschen zu einen Rucksack als Tragegesteilrahmen einsetzbar ist.

Diese Vorrichtung hat jedoch den Nachteil, daß die als Rucksackrahmen verwendeten Teile des Gepäckträgers untereinander mit Hilfe mehrerer Lastösenbolzen zu verbinden sind, was, auch wenn dies eine gewisse Anpassungsfähigkeit der Gepäckträgerteile an die Größe des Rucksackträgers gewährleistet, das Umstellen durch das umständliche Herauslösen der Sicherungsringe aufwendig und langwierig gestaltet.

Insbesondere für sportliche Fahrer, die ja bekanntermaßen hohe Ansprüche an die Funktionalität der von ihnen benutzten Gegenstände stellen und die daher eine rasche, mist wenigen Handgriffe zu bewerkstelligende Umrüstung der am Fahrrad befestigten Packtaschen und deren Zusammenbau zu einem Rucksack wünschen, bieten die bekannten Befestigungsvorrichtungen keine akzeptable Lösung.

Der Erfindung liegt daher die Aufgabe zugrunde, eine Befestigungsvorrichtung zu schaffen, die neben einer bei Geländefahrten ausreichend sicheren Befestigung von Packtaschen am Fahrrad auch eine rasche, unkomplizierte Montage bzw. Demontage der Packtaschen an das bzw. von dem Fahrrad sowie eine Zusammenstellung derselben zu einem Rucksack gewährleistet.

Diese Aufgabe wird erfindungsgemäß dadurch gelöst, daß die Packtaschen Verbindungselemente zum Verbinden der Packtaschen miteinander oder zum Einhängen oder Einspannen der Packtaschen an entsprechenden Gegenstücken des Fahrrades aufweisen,wobei die Verbindungselemente an starren Beschlägen vorgesehen sind, welche an den zum Fahrrad weisenden Außenseiten der Packtaschen jeweils an einer Rückwandversteifung der Packtaschen befestigt sind.

Da die zur Verbindung der einzelnen Packtaschen vorgesehenen Beschläge starr mit der einer Packtasche zugeordneten Rückwandversteifung verbunden sind, sind die Packtaschen steckmodulartig in entsprechende am Fahrrad oder in die an einer anderen Packtasche befindlichen Gegenstücke einhäng- und einspannbar, ohne daß hierzu eine Vielzahl verschiedener Riemen erst gelegt und dann verspannt werden müssen. Darüber hinaus ist eine Befestigungsvorrichtung geschaffen, mit der eine starre Verbindung der Packtaschen sowohl mit dem Fahrrad als auch untereinander bei der Zusammenstellung zu einem Rucksack erstellbar ist.

Dabei sieht eine besonders vorteilhafte Ausführungsform gemäß der Erfindug vor, daß die Verbindungselemente entweder als Einhängeelemente oder als Aufnahmevorrichtungen zur Aufnahme der Einhängeelemente ausgebildet sind, wobei die Packtaschen jeweils paarweise mit Einhängeelement aufweisenden Beschlägen oder mit Aufnahmevorrichtung aufweisenden Beschlägen ausgerüstet sind.

Da die Packtaschen jeweils paarweise mit Einhängeelementen aufweisenden bzw. mit Aufnahmevorrichtungen aufweisenden Beschlägen ausgerüstet sind, ist bei einer Verwendung von vier Packtaschen durch einfaches Einstecken der Einhängeelemente in die entsprechenden Aufnahmevorrichtungen ein Rucksack zusammenstellbar. Zum Erstellen der starren Verbindung ist an entsprechenden Stellen jeweils ein Schnellspanner vorgesehen, der zweckmäßigerweise einseitig an einer Aufnahmevorrichtung schwenkbar angeordnet ist.

Vorzugsweise ist ein Einhängeelement aus einem Steg und einem Haltebügel bestehend T-förmig und eine Aufnahmevorrichtung als L-förmige Ausnehmung ausgebildet. Die Verbindungselemente sind jeweils auf einem der Breite einer Packtasche befindlichen Beschlag angeordnet und ragen über die Höhe des Packsackes der Packtasche hinaus. Die Aufnahmevorrichtung ist komplementär zu dem Querschnitt des Steges des Einhängeelementes ausgebildet.

Zum Anbringen der Vorderradpacktaschen am Fahrrad befindet sich an jeder Gabelscheide des Vorderrades ein einen Einhängebolzen und eine Schnellspannvorrichtung aufweisendes Befestigungsstück, das mit dem oberen Einhängestück einer Vorderradpacktasche zusammenwirkend verbindbar ist. Da die Vorderradpacktasche mit ihrem Einhängeelement somit unmittelbar an der Gabelscheide befestigbar ist, ist ein Vorderradgepäckträger überflüssig. Bei besonderer Beanspruchung ist es vorteilhaft, im Bereich der Vorderradachse zusätzlich einen Fixierbolzen vorzusehen, der mit einer entsprechenden, an der Radtasche befindlichen Aufnahmevorrichtung, beispielsweise einem gabelförmigen Fixierstück, im Eingriff steht.

Die Hinterradpacktaschen sind über einen Träger mit Hilfe von Schnellspannern am Fahrrad befestigbar. Als zweiter Befestigungspunkt ist in den unteren Beschlag der Hinterradpacktasche eine Aufnahmevorrichtung eingebracht, die mit einem am Fahrradrahmen befestigten Gegenstück im Eingriff steht. Der Träger selbst ist vorzugsweise dreigliedrig ausgebildet und an der Sattelstütze ebenfalls mit einem Schnellspanner befestigbar, so daß dieser mit einem Handgriff vom Fahrrad entfernbar ist. Da die Packtaschenrückwände versteift sind und da diese starr mit dem Träger verbunden sind, übernehmen die Packtaschen selbst die Funktion herkömmlicher Gepäckträgerstreben.

In einem weiteren Ausführungsbeispiel sind die Beschläge einer Hinterradpacktasche im Bereich ihrer Aufnahmevorrichtungen um 90 Grad von der Packtasche wegweisend abgewinkelt angeordnet. Die Aufnahmevorrichtungen weisen im wesentlichen dieselben Merkmale wie die an der Vorderradgabel vorgesehenen Befestigungsstücke auf. Eine Verwendung dieser Aufnahmevorrichtungen vereinfacht die Rucksackmontage.

Weitere Ausgestaltungen und Vorteile der Erfindung ergeben sich aus den Unteransprüchen sowie aus der nachfolgenden Figurenbeschreibung. Es zeigen:
- Fig. 1: in teilperspektivischer Seitenansicht ein durch einen Radfahrer bewegtes Fahrrad mit montierten Packtaschen,
- Fig. 2: eine Draufsicht auf die Rückseite einer in Fahrtrichtung linken Vorderradpacktasche,
- Fig. 3: eine Draufsicht auf die Rückseite einer in Fahrtrichtung linken Hinterradpacktasche,
- Fig. 4: eine schematische, zum Teil geschnittene Seitenansicht einer Hinterradpacktasche mit einer innenliegenden, ein Randversteifungselement aufweisenden Rückwandverstärkung,
- Fig. 5: eine an der in Fahrtrichtung rechten Gabelscheide einer Fahrradgabel angebrachte Vorderradpacktasche in einer zum Teil geschnittenen Ansicht,
- Fig. 6: ein zum Anbringen einer Vorderradpacktasche an einer Fahrradgabel vorgesehenes Befestigungsstück in perspektivischer Ansicht,
- Fig. 7: ein weiteres Ausführungsbeispiel einer an einer Hinterradpacktasche befindlichen Aufnahmevorrichtung,
- Fig. 8: in perspektivischer Darstellung einen zum Montieren von zwei Hinterradpacktaschen am Fahrrad vorgesehenen Träger,
- Fig. 9: einen Ausschnitt aus einem weiteren Träger zum Montieren von zwei Hinterradpacktaschen am Fahrrad gemäß der Fig. 7,
- Fig. 10: in zum Teil geschnittener Ansicht einen zum Befestigen der Packtaschen vorgesehenen Schnellspanner im eingespannten Zustand,
- Fig. 11: einen aus zwei Hinterradpacktaschen gebildeten Rucksack in perspektivischer Ansicht ohne Darstellung der zum starren Verbinden notwendigen Schnellspanner,
- Fig. 12: in perspektivischer Ansicht einen aus zwei Hinterrad- und zwei Vorderradpacktaschen gebildeten Rucksack ohne Darstellung der Schnellspanner,
- Fig. 13: in perspektivischer Teilansicht einen aus zwei Hinterrad- und zwei Vorderradpacktaschen gebildeten Rucksack, wobei die Hinterradpacktaschen die Aufnahmevorrichtung gemäß der Fig. 7 aufweisen.

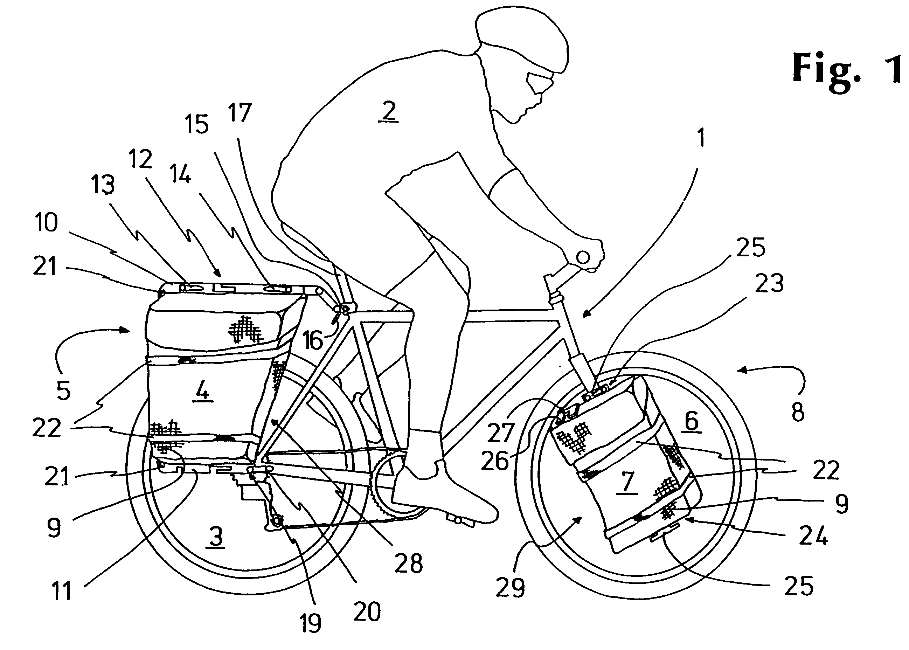

Fig. 1 zeigt in teilperspektivischer Seitenansicht ein Fahrrad 1 mit einem darauf sitzenden Radfahrer 2. An dem Fahrrad 1 sind beidseitig neben dem Hinterrad 3 Hinterradpacktaschen 4, 5 und beidseitig neben dem vorderrad 6 Vorderradpacktaschen 7, 8 angebracht. Die Packtaschen 4, 5, 7, 8 bestehen im wesentlichen aus einem aus wasserdichtem Gewebe gefertigten Packsack 9, an dessen dem jeweiligen Laufrad 3, 6 zugewandten Seite Befestigungsmittel zum Anbringen der Packtaschen 4, 5, 7, 8 am Fahrrad 1 angeordnet sind.

Die Hinterradpacktasche 4 weist einen oberen Beschlag 10 und einen unteren Beschlag 11 auf. Beide Beschläge 10, 11 ragen über die Höhe des Packsackes 9 hinaus und erstrecken sich im wesentlichen über die gesamte Breite des Packsackes 9.

Die Hinterradpacktasche 4 ist durch einen oberhalb des Hinterrades 3 angeordneten Träger 12 mit dem Fahrrad 1 verbunden. Die Verbindung der Hinterradpacktasche 4 mit dem Träger 12 ist mit zwei Schnellspannern 13, 14 herstellbar. Der Träger 12 ist dreigliedrig ausgebildet und weist ein vorderes Verbindungsstück 15 auf, welches mit dem Schnellspanner 16 zum Feststellen der Sattelstütze 17 im Eingriff steht. Der Träger 12 ist somit auf einfache Weise allein durch Lösen des Schnellspanners 16 und durch Herausheben des Verbindungsstückes 15 vom Fahrrad 1 entfernbar.

In dem in Fahrtrichtung vorderen Bereich des Beschlages 11 ist eine Aussparung 19 vorgesehen, mit der die Hinterradpacktasche 4 auf die Hinterradachse des Fahrrades 1 im Bereich des Hinterradschnellspanners 20 aufgesetzt ist.

In einer weiteren Ausgestaltung ist die Aussparung 19 auf einen in ein Anlötende im Bereich der Hinterradachse eingebrachten Bolzen aufsetzbar.

Die Beschläge 10, 11 reichen mit ihrem in Fahrtrichtung hinteren Ende über die Breite des Packsackes 9 hinaus. In dem überstehenden Teil der Beschläge 10, 11 ist jeweils eine Öse 21 eingebracht. In den Ösen 21 sind bei einer Verwendung der Packtasche 4 im Zusammenbau mit den übrigen Packtaschen 5, 7, 8 als Rucksack Tragegurte befestigbar.

Die Hinterradpacktasche 4 wird von zwei Spannriemen 22 umschlossen, die aus je zwei durch einen Klettenverschluß zusammengehaltenen Spannriemenstücken bestehen, so daß die Packtasche 4 bei nur teilweiser Befüllung zusammenpreßbar ist.

Die Hinterradpacktasche 5 ist im wesentlichen spiegelsymmetrisch bezüglich der Längsachse des Fahrrades 1 zur Hinterradpacktasche 4 ausgestaltet.

Die Vorderradpacktasche 7 weist einen oberen Beschlag 23 und einen unteren Beschlag 24 auf, die beide zumindest abschnittsweise über die Höhe des Packsackes 9 hinausragen. Die Beschläge 23, 24 weisen je ein bezüglich der Breite der Packtasche 7 mittig angeordnetes, T-förmiges Einhängestück 25 auf. An dem in Fahrtrichtung hinteren Ende der Beschläge 23, 24 ist je ein Verbindungswinkel 26 vorgesehen, dessen im wesentlichen um 90 Grad abgewinkelter Schenkel zur Frontseite der Packtasche 7 gerichtet ist und eine Aussparung 27 aufweist. An der Vorderradpacktasche 7 sind ebenfalls Spannriemen 22 vorgesehen.

Die in Fahrtrichtung linke Vorderradpacktasche 8 ist im wesentlichen spiegelsymmetrisch bezüglich der Längsachse des Fahrrades 1 zur Vorderradpacktasche 7 ausgebildet.

Es ist vorteilhaft, die Hinterradpacktaschen 4, 5 mit einem schräg verlaufenden, in Fahrtrichtung nach vorne weisenden Seitenteil 28 auszugestalten. In einer Draufsicht auf die Frontseite der Hinterradpacktaschen 4, 5 weist die schmalere Seite dann nach unten. Auf diese Weise ist auch bei Fahrrädern 1 mit einem kurzen Abstand zwischen der Hinterachse und der Tretkurbel ausreichend Spielraum zwischen den Fersen des Radfahrers 2 und dem vorderen Seitenteil 28 der Hinterradpacktaschen 4, 5 belassen, um nicht den Tretvorgang zu behindern.

Die konkave Formgebung der in Fahrtrichtung nach hinten weisenden Seite 29 der vorderen Packtaschen 7, 8 dient einer besseren Anpassung an den Rücken eines Radfahrers, wenn die beiden Vorderradpacktaschen 7, 8 mit den beiden Hinterradpacktaschen 4, 5 zu einer Trageeinheit, vorzugsweise zu einem Rucksack, zusammengesetzt sind.

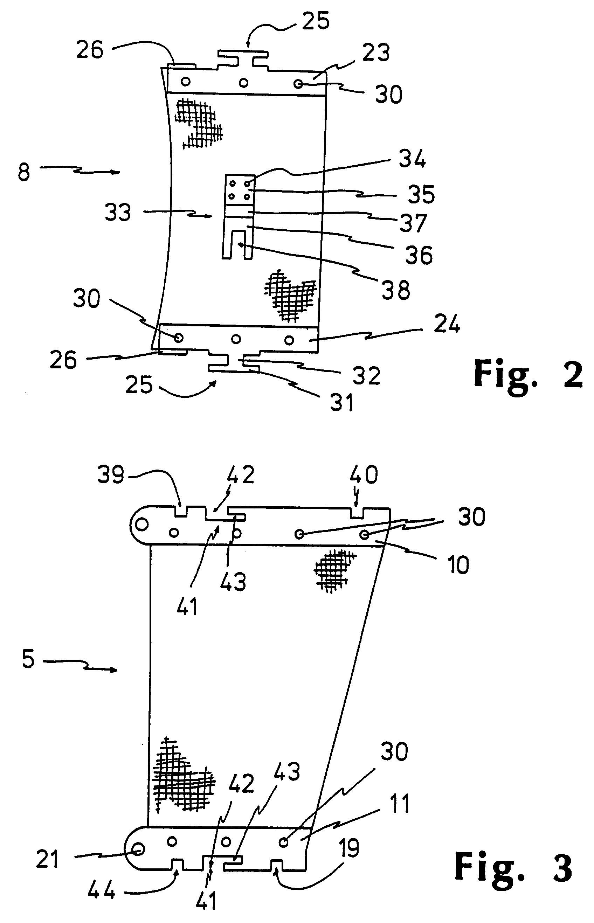

In Fig. 2 ist in einer Draufsicht die Rückseite der in Fahrtrichtung linken Vorderradpacktasche 8 dargestellt. Der obere Beschlag 23 und der untere Beschlag 24 sind mit Nieten 30 auf der Rückseite der Packtasche 8 befestigt. Nach oben beziehungsweise nach unten ragt jeweils das von dem oberen Beschlag 23 beziehungsweise von dem unteren Beschlag 24 ausgehende, T-förmige Einhängestück 25 über die Höhe des Packsackes hinaus.

Das T-förmige Einhängestück 25 besteht im wesentlichen aus einem der Längserstreckung der Beschläge 23, 24 folgenden Haltebügel 31, der mittig durch einen Steg 32 mit dem Beschlag 23 bzw. 24 verbunden ist. An dem in Fahrtrichtung hinteren Ende der Beschläge 23, 24 ist der Verbindungswinkel 26 sichtbar.

Im mittleren Bereich der Rückseite der Packtasche 8 ist ein gabelförmiges Fixierstück 33 durch Nieten 34 fest mit der Vorderradpacktasche 8 verbunden. Das Fixierstück 33 weist einen unmittelbar an der Rückseite der Vorderradpacktasche 8 anliegenden Befestigungsabschnitt 35, einen mit Abstand von der Rückseite befindlichen gegabelten Einsteckabschnitt 36 und ein den Befestigungsabschnitt 35 mit dem Einsteckabschnitt 36 verbindendes Querstück 37 auf. In den gegabelten Einsteckabschnitt 36 ist eine U-förmige Ausnehmung 38 eingebracht.

In Fig. 3 ist in einer Draufsicht die Rückseite der linken Hinterradpacktasche 5 dargestellt. Der obere Beschlag 10 und der untere Beschlag 11 sind durch Nieten 30 auf der Rückseite der Hinterradpacktasche 5 befestigt. Der obere Beschlag 10 weist zwei Aussparungen 39, 40 zum Befestigen der Hinterradpacktasche 5 mit Schnellspannern an dem Träger 12 auf.

Weiterhin sind an den Beschlägen 10, 11 jeweils gleichsinnig orientierte L-förmige Ausnehmungen 41 vorgesehen. Die L-förmigen Ausnehmungen 41 weisen eine am äußeren Rand der Beschläge 10, 11 beginnende Einstecköffnung 42 und einen von der Einstecköffnung 42 ausgehenden, sich in Fahrtrichtung erstreckenden Halteschlitz 43 auf. Die Öffnungsweite der Einstecköffnung 42 entspricht im wesentlichen der Breite des Steges 32 der Vorderradpacktasche 7, 8. Die Breite des Halteschlitzes 43 entspricht im wesentlichen der Dicke des Steges 32.

An der in Fahrtrichtung vorderen Seite des unteren Beschlages 11 ist die Aussparung 19 zum Einsetzen der Hinterradpacktasche 5 auf die Hinterradachse vorgesehen. Eine der Aussparung 39 des oberen Beschlages 10 gegenüberliegende, gleichartig ausgebildete Aussparung 44 dient in dem unteren Beschlag 11 als weiteres Verbindungsmittel beim Zusammenbau der Packtaschen 4, 5, 7, 8 zu einem Rucksack. An dem in Fahrtrichtung hinteren Ende der Beschläge 10, 11 sind die zum Einhängen vön Tragegurten vorgesehenen Ösen 21 angebracht. Tragegurte sind beispielsweise durch Karabinerhaken in den Ösen 21 befestigbar. In einer weiteren Ausgestaltung der Ösen 21 sind diese als Langlöcher zum unmittelbaren Durchführen der Tragegurte ausgelegt.

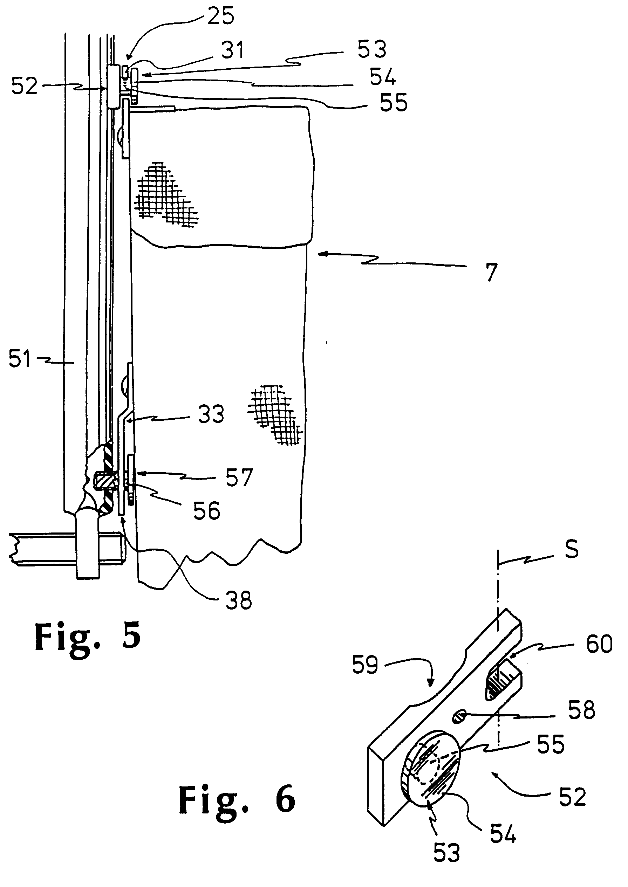

In Fig. 4 ist in einer zum Teil geschnittenen Ansicht der Aufbau der zum Laufrad 3 weisenden Rückseite der Packtasche 4 dargestellt. Die Packtasche 4 besteht im wesentlichen aus dem Packsack 9, dessen Rückseite 45 von einer in dem Packsack 9 befindlichen Rückwandverstärkung 46 ausgesteift ist. Die Rückwandverstärkung 46 erstreckt sich im wesentlichen über die gesamte Fläche der Rückwand des Packsackes 9. Die Rückwandverstärkung 46 besteht aus einem Plattenanteil 47 und einem Randversteifungselement 48. Das Randversteifungselement 48 ist entlang des gesamten Umfanges des Plattenanteils 47 vorgesehen.

Es ist vorteilhaft, wie in Fig. 4 dargestellt, zwischen dem Plattenanteil 47 und dem Randversteifungselement 48 eine Krümmung 49 vorzusehen, damit die Gefahr eines Einreißens des Packsackes 9 am Übergang zwischen dem Plattenanteil 47 und dem Randversteifungselement 48 verhindert ist.

Von außen sind auf der Rückseite 45 die Beschläge 10, 11 aufgebracht und durch Nieten 30 fest mit der Rückwandverstärkung 46 verbunden. Die Nietverbindung ist ebenso wie das Gewebe des Packsackes 9 wasserdicht. Durch Anbringen der Beschläge 10, 11 an der Außenseite des Packsackes 9 wird zugleich die Rückseite 45 des Packsackes 9 an der Rückwandverstärkung 46 fixiert. Durch die große Auflagefläche der Beschläge 10, 11 auf dem Gewebe ist ein Einreißen des Packsackes 9 im Bereich der Nieten 30 auch bei hohen Belastungen verhindert.

In einem weiteren, nicht dargestellten Ausführungsbeispiel stellt die Rückwandverstärkung 46 zugleich die Rückseite der Packtasche 4, 5, 7, 8 dar, wobei die Seitenteile des Packsackes 9 mit der Rückwandverstärkung verklebt sind.

Fig. 5 zeigt in Fahrtrichtung blickend die an der rechten Gabelscheide 51 angebrachte rechte Vorderradpacktasche 7. Die Vorderradpacktasche 7 steht über das obere Einhängestück 25 mit einem an der Gabelscheide 51 angebrachten Befestigungsstück 52 im Eingriff. Das in Fig. 6 perspektivisch gezeigte Befestigungsstück 52 weist an seinem in Fahrtrichtung hinteren Ende einen Einhängebolzen 53, bestehend aus einem Bolzenkopf 54 und einem Bolzenschaft 55, auf, wobei der Bolzenkopf 54 im Durchmesser deutlich größer als der Bolzenschaft 55 ist. Die Packtasche 7 ist mit dem Haltebügel 31 des Einhängestückes 25 auf den Bolzenschaft 55 aufgesteckt, so daß das Gewicht der Packtasche 7 an dem Einhängebolzen 53 aufliegt.

Die U-förmige Ausnehmung 38 des Fixierstückes 33 ist über den Schaft 56 eines in die Gabelscheide 51 eingeschraubten Fixierbolzens 57 geschoben. In einer weiteren Ausgestaltung ist der Fixierbolzen 57 an einem am unteren Ende der Gabelscheide befindlichen Anlötende vorgesehen.

Es ist vorteilhaft, daß das obere Ende der Ausnehmung 38 nicht auf dem Schaft 56 des Fixierbolzens 57 aufliegt, damit ausreichend Spielraum zum freien Schwingen der Fahrradgabel belassen ist. Es ist ebenfalls möglich, den Einsteckabschnitt 36 und somit die U-förmige Ausnehmung 38 des Fixierstückes 33 sehr viel länger als in Fig. 6 gezeigt auszugestalten, damit, wenn die Vorderradpacktasche 7 an einer in ihrem unteren Abschnitt gefederten Fahrradgabel angebracht ist, der gewünschte Federvorgang nicht behindert ist. Ein Aufsetzen des als Anschlag wirkenden Endes der Ausnehmung 38 auf den Bolzenschaft 56 könnte zu einer Beschädigung der Rückwandverstärkung führen.

Fig. 6 zeigt in gegenüber Fig. 5 vergrößerter Darstellung das Befestigungsstück 52, das mit einer durch eine Bohrung 58 geführten Schraube (nicht dargestellt) an der Gabelscheide 51 befestigbar ist. An der der Gabelscheide 51 zugewandten Seite des Befestigungsstückes 52 ist zur Erzielung einer größeren Befestigungsfläche eine Gabelaussparung 59 vorgesehen. An dem in Fahrtrichtung hinteren Ende des Befestigungsstückes 52 ist der Einhängebolzen 53 angebracht. An dem in Fahrtrichtung vorderen Ende des Befestigungsstückes 52 ist eine U-förmige Ausnehmung 60 vorgesehen. Nach dem Einhängen des an der Vorderradpacktasche 7 angeordneten Kaltebügels 31 gelangt die Ausnehmung 60 im wesentlichen mit der in Fahrtrichtung vorderen Aussparung des Einhängestückes 25 zur Deckung, so daß das Einhängestück 25 und das Befestigungsstück 52 durch einen Schnellspanner miteinander verbindbar sind.

In einer Weiterbildung des in Fig. 6 gezeigten Befestigungsstückes 52 ist der zur Verbindung vorgesehene Schnellspanner unmittelbar an dem Befestigungsstück 52 befestigt. Das dem Exzenterstück des Schnellspanners gegenüberliegende Widerlager ist um die in Fig. 6 gezeigte Achse S schwenkbar in die Ausnehmung 60 eingebracht. Dies hat den Vorteil, daß die einmal gelösten Schnellspanner nicht verlorengehen können und daß nach dem Einhängen einer Vorderradpacktasche 7, 8 lediglich der Schnellspanner über das Einhängestück 25 geschwenkt werden muß und sodann zum Einklemmen umgelegt werden kann.

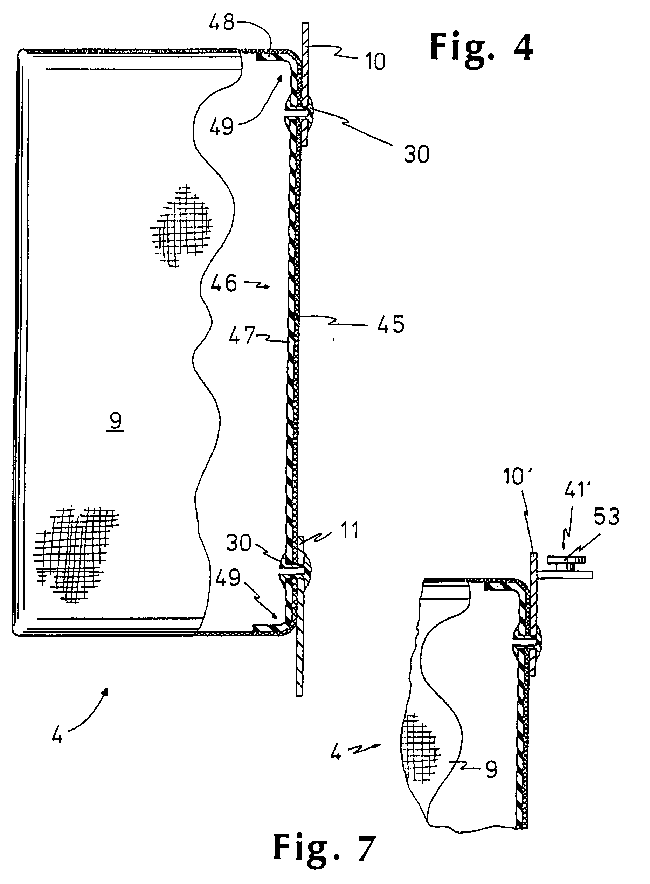

In Fig. 7 ist ein Ausschnitt einer weiteren Hinterradpacktasche 4 gezeigt, deren oberer Beschlag 10' im Bereich seiner Aufnahmevorrichtung 41' einen rechten Winkel bildend von dem Packsack 9 wegweisend abgewinkelt ist. Die Aufnahmevorrichtung 41' weist im wesentlichen dieselben Merkmale auf wie das zu Fig. 6 beschriebene Befestigungsstück 52. Bei diesem Ausführungsbeispiel ist insbesondere vorgesehen, daß die zum Einspannen verwendeten Schnellspanner unmittelbar an der Aufnahmevorrichtung 41' befestigt sind. Die unteren Beschläge der Hinterradpacktasche 4 sind entsprechend ausgebildet.

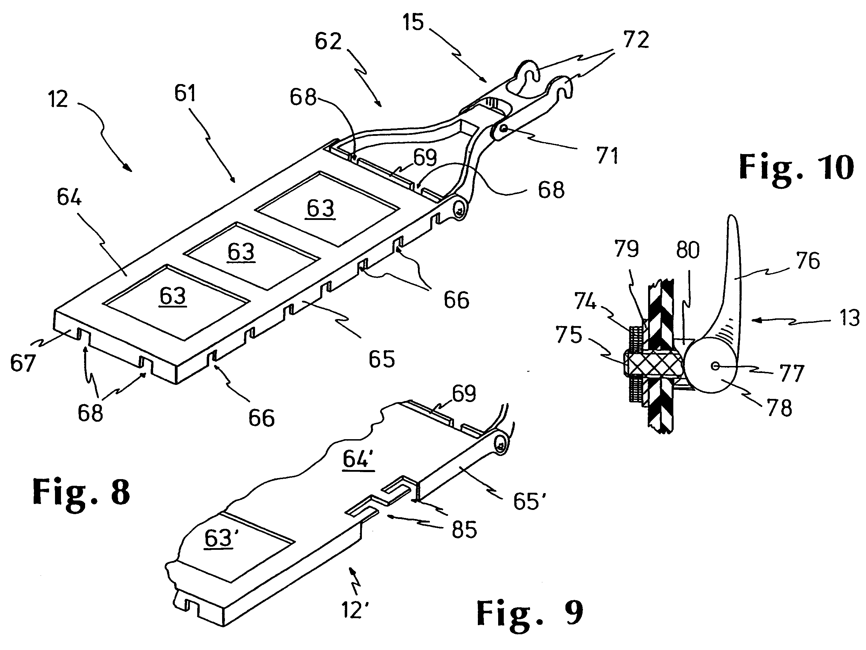

In Fig. 8 ist der zum Verbinden der beiden hinteren Packtaschen 4, 5 verwendete Träger 12 in perspektivischer Ansicht dargestellt. Der Träger 12 ist dreigliedrig ausgebildet und weist ein Tragestück 61, ein Mittelstück 62 und das Verbindungsstück 15 auf.

Das Tragestück 61 ist länger als der obere Beschlag einer Hinterradpacktasche 4, 5. Wie weiter unten erläutert, ist es vorteilhaft, daß die Länge des Tragestückes 61 im wesentlichen der doppelten Tiefe einer gefüllten Hinterradpacktasche 4, 5 entspricht. Das Tragestück 61 besteht im wesentlichen aus einer mit Öffnungen 63 versehenen Trägerplatte 64. Es ist vorteilhaft, die Trägerplatte 64 an ihrer Oberseite flach auszugestalten, damit auf dem Tragestück 61 zusätzliche Gepäckstücke befestigbar sind.

An der Trägerplatte 64 sind zwei der Längserstreckung der Trägerplatte 64 folgende, nach unten weisende Seitenteile 65 vorgesehen. Die Seitenteile 65 ragen an dem in Fahrtrichtung vorderen Ende über die Länge der Trägerplatte 64 hinaus. In die Seitenteile 65 sind eine Vielzahl von Ausnehmungen 66 eingebracht, deren Abstände voneinander so bemessen sind, daß jeweils zwei Ausnehmungen 66 mit den am oberen Beschlag der Hinterradpacktasche befindlichen Aussparungen 39, 40 deckungsgleich sind. Durch die heim Zusammenbau aneinandergrenzenden Ausnehmungen und Aussparungen 66 und 39 bzw. 66 und 40 sind Schnellspanner zum Befestigen der Hinterradpacktaschen an den Seitenteilen 65 des Trägers 12 einsetzbar. Durch die Öffnungen 63 ist es möglich, daß beim Verbinden der Hinterradpacktaschen mit dem Träger 12 durch Schnellspanner die Mutter eines Schnellspanners mit den Fingern erreichbar ist.

Die beiden Seitenteile 65 sind durch ein Rückseitenteil 67 miteinander verbunden. In dem Rückseitenteil 67 sind Ausnehmungen 68 vorgesehen, deren Abstand dem Abstand zwischen der Aussparung 39 und der Einstecköffnung 42 des oberen Beschlages 10 bzw. des unteren Beschlages 11 entspricht.

Das Tragestück 61 ist gelenkig mit dem Mittelstück 62 verbunden. Das Mittelstück 62 ist steigbügelförmig ausgebildet, wobei ein in Fahrtrichtung hinteres, breiteres Querstück 69 zwischen die über die Trägerplatte 64 hinausragenden Abschnitte der Seitenteile 65 angeordnet ist. In dem Querstück 69 sind Ausnehmungen 68 vorgesehen, deren Öffnungen nach oben weisen. Ein in Fahrtrichtung vorderes schmaleres Querstück 70 ist über ein Gelenk 71 mit dem Verbindungsstück 15 verbunden. Im Gegensatz zu der gelenkigen Verbindung zwischen dem Tragestück 61 und dem Mittelstück 62 ist das Gelenk 71 durch einen auf der hinteren, in Fig. 8 nicht einsehbaren Seite befindlichen Schnellspanner feststellbar. In seinem in Fahrtrichtung vorderen Abschnitt weist das Verbindungsstück 15 zwei Verbindungsklauen 72 auf, die beim Montieren des Trägers 12 an das Fahrrad 1 am Schnellspanner 16 der Sattelstütze 17 einklemmbar sind.

Da der Träger 12 dreigliedrig ist und mit zahlreichen in den Seitenteilen 65 des Tragestücks 61 befindlichen Ausnehmungen 66 versehen ist, ist es einem Benutzer möglich, die Hinterradpacktaschen mit dem Träger 12 an unterschiedlich bemessene Fahrradrahmen zu befestigen.

In einer weiteren Ausgestaltung des Trägers 12 sind anstelle der Ausnehmungen 66 in den Seitenteilen 65 Bohrungen mit eingesetzten Gewindehülsen vorgesehen, in welche die Schnellspanner zum Anbringen der Hinterradpacktaschen 4, 5 einschraubbar sind.

Fig. 9 zeigt einen Ausschnitt eines weiteren Trägers 12', dessen Seitenteile 65' im Bereich der Befestigung der Hinterradpacktasche 4 mit einer Aufnahmevorrichtung 41' ausgelegt ist. Die Trägerplatte 64' weist lediglich eine hintere Öffnung 63' auf. Im mittleren Bereich der Trägerplatte 64' sind zwei im wesentlichen gleichartig ausgestaltete L-förmige Ausnehmungen 85 zur Aufnahme des Einhängebolzens 53 bzw. zur Aufnahme des Schaftes des an dem Befestigungselement angebrachten Schnellspanners.

In einer weiteren Ausgestaltung der L-förmigen Ausnehmungen 85 ist der in Fig. 9 parallel zu den Seitenteilen 65' verlaufende Bereich der Ausnehmungen 85 zunehmend einen größeren Abstand zun den Seitenteilen 65' bildend ausgebildet. Auf diese Weise sind die Hinterradpacktaschen 4, 5 in jedem Fall spielfrei an den Seitenteilen 65' anliegend mit dem Träger 12' verbindbar.

Fig. 10 zeigt in einer zum Teil geschnittenen Ansicht den oben erwähnten Schnellspanner 13 im Detail. Der Schnellspanner 13 besteht im wesentlichen aus einer Zweirippenmutter 74, einer Gewindestange 75 und einem Spannhebel 76. Der Spannhebel 76 steht über eine an der Gewindestange 75 angebrachten Achse 77 mit der Gewindestange 75 im Eingriff. Der Achse 77 ist im Exzenterteil 78 des Spannhebels 76 drehbar gelagert. Um die zwischen der Zweirippenmutter 74 und dem Exzenterteil 78 einzuspannenden Elemente vor Beschädigung zu beschützen, sind auf der der Zweirippenmutter 74 zugewandten Seite eine Beilagscheibe 79 und auf der dem Spannhebel 76 zugewandten Seite ein Exzenterlager 80 vorgesehen.

Zum Lösen der Vorderradpacktaschen 7, 8 von dem Fahrrad 1 wird der zur Verbindung des Einhängestückes 25 mit dem Befestigungsstück 52 verwendete Schnellspanner geöffnet. Anschließend wird die Vorderradpacktasche 7, 8 in Fahrtrichtung nach vorne um die Achse des an der Gabelscheide 51 befindlichen Fixierbolzens 57 gedreht, damit der Haltebügel 31 von dem Einhängebolzen 57 gelöst ist. Durch Anheben der Vorderradpacktasche 7, 8 gleitet das gegabelte Fixierstück 33 von dem Fixierbolzen 57, so daß die Vorderradpacktasche 7, 8 vollständig vom Fahrrad 1 gelöst ist. Lediglich das Befestigungsstück 52, gegebenenfalls mit dem daran befestigten Schnellspanner, und der Fixierbolzen 57 verbleiben an der Gabelscheide 51.

Zum Entfernen der Hinterradpacktasche 4, 5 von dem Fahrrad 1 werden zunächst die Schnellspanner 13, 14 geöffnet, so daß die Hinterradpacktasche 4, 5 von dem Träger 12 gelöst ist und nur noch durch den Hinterradschnellspanner 20 mit dem Fahrrad 1 verbunden ist. Während der Radfahrer 2 mit der einen Hand die Hinterradpacktasche 4 festhält, wird der Hinterradschnellspanner 20 soweit geöffnet, daß der untere Beschlag 11 mit der Aussparung 19 von der Hinterradachse abhebbar ist. Die Hinterradpacktasche 4, 5 kann dann neben dem Fahrrad 1 abgelegt werden.

Der Träger 12 ist durch Öffnen des Schnellspanners 16 und durch anschließendes Herausziehen der Verbindungsklauen 72 aus der Sattelstützenklemme vom Fahrrad 1 entfernbar. Im Bereich des Hinterrades 3 verbleibt somit nach Entfernen der Hinterradpacktaschen 4, 5 und des Trägers 12 kein Befestigungselement und insbesondere kein störender Gepäckträger.

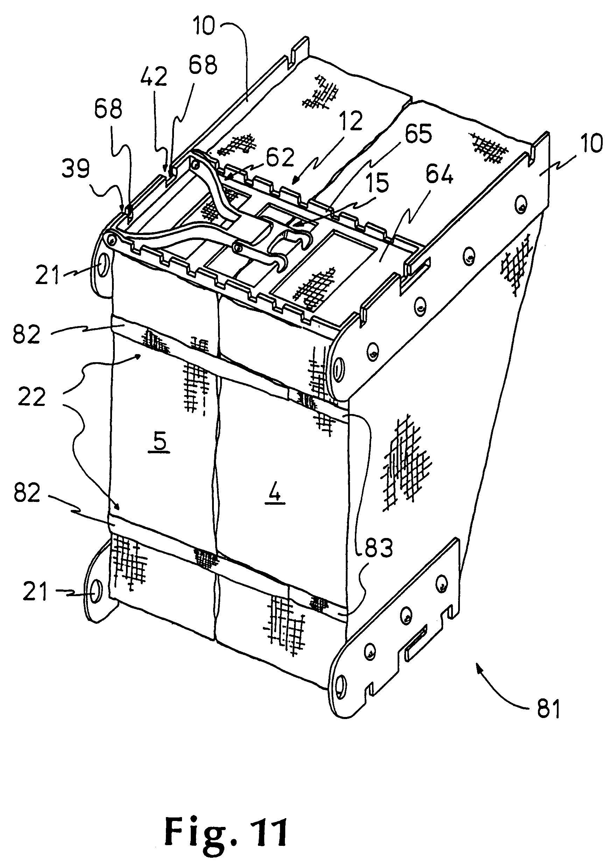

Die beiden Hinterradpacktaschen 4, 5 sind, wie in Fig. 11 dargestellt, zu einem Rucksack 81 zusammensetzbar. Die zum festen Zusammenhalten des Rucksacks 81 verwendeten Schnellspanner sind nicht abgebildet.

Die Hinterradpacktaschen 4, 5 werden zunächst mit ihren Frontseiten gegeneinander gestellt. Da die Spannriemen 22 zweiteilig ausgebildet sind und an der Hinterradpacktasche 5 an der in Fahrtrichtung hinteren Seite kürzere Spannriemenstücke 82 vorgesehen sind, während an der Hinterradpacktasche 4 an der in Fahrtrichtung hinteren Seite längere Spannriemenstücke 83 angebracht sind, ist ein Zusammenhalten der beiden Hinterradpacktaschen 4, 5 bereits durch die Spannriemenstücke 82, 83, wie in Fig. 11 dargestellt, möglich. Es ist vorteilhaft, die kürzeren Spannriemenstücke 82 und die längeren Spannriemenstücke 83 als zwei Teile eines Klettenverschlusses vorzusehen.

Zwischen die über die Höhe der Hinterradpacktaschen 4, 5 hinausragenden Anteile der Beschläge 10 wird der Träger 12 eingesetzt, wobei das Mittelstück 62 mit dem Verbindungsstück 15 unter die Trägerplatte 64 geklappt ist. Die Seitenteile 65 weisen nach oben. Der Träger 12 wird justiert, bis die nach oben offenen Ausnehmungen 68 mit der Aussparung 39 und mit der Einstecköffnung 42 des oberen Beschlages 10 zur Deckung gelangen. Der Träger 12 wird durch Schnellspanner, die in die nun aneinandergrenzenden Ausnehmungen bzw. Aussparungen 68 und 39 bzw. 68 und 42 eingesetzt werden, fest mit den oberen Beschlägen 10 der beiden Hinterradpacktaschen 4, 5 verbunden.

Da auf diese Weise eine feste Verbindung der beiden Hinterradpacktaschen 4, 5 gegeben ist und diese Verbindung, wie in Fig. 11 dargestellt, die Oberseite des Rucksacks 81 bildet, ist es ausreichend, wenn der aus drei im wesentlichen verwindungssteifen Elementen bestehende Rucksack 81 in seinem unteren Bereich allein durch die verkletteten Spannriemenstücke 82, 83 zusammengehalten ist.

Die nach außen weisenden Rückwandverstärkungen der Hinterradpacktaschen 4, 5 schützen zudem den Packtascheninhalt vor Beschädigungen.

In die Ösen 21 werden mit Karabinerhaken zwei Schultertragegurte (nicht dargestellt) eingehängt. Es ist darüber hinaus möglich, an dem den Ösen 21 zugewandten Seitenteil 65 des Trägers 12 einen in der Mitte angeordneten, weiteren Befestigungspunkt für die Tragegurte vorzusehen, so daß die Tragegurte auf dem Rücken des Radfahrers 2 zusammengeführt anbringbar sind.

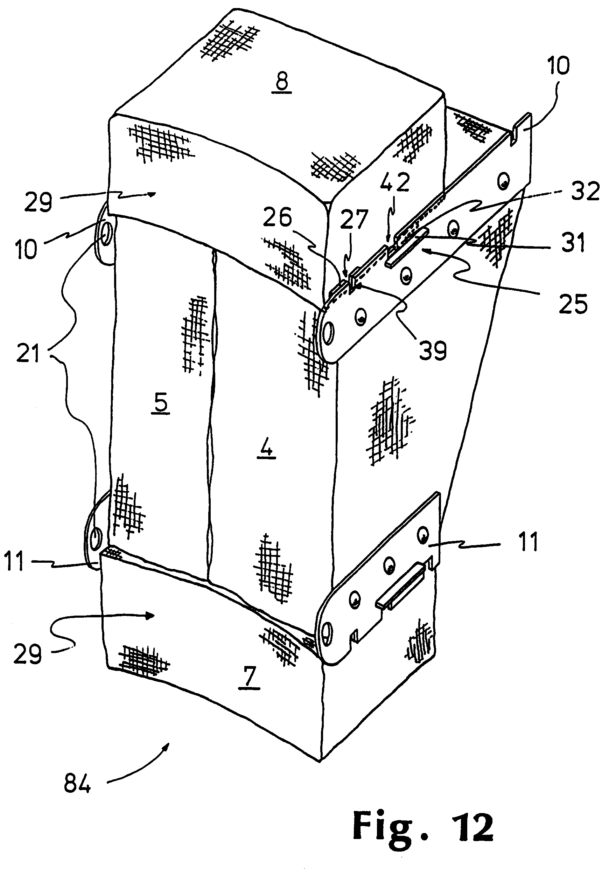

Die Hinterradpacktaschen 4, 5 sind mit den Vorderradpacktaschen 7, 8, wie in Fig. 12 gezeigt, zu einem Rucksack 84 zusammensetzbar. In Fig. 12 sind ebenfalls die zum festen Zusammenhalten des Rucksackes 84 notwendigen Schnellspanner nicht dargestellt.

Die Hinterradpacktaschen 4, 5 werden mit ihren Frontseiten gegeneinandergestellt, so daß die Beschläge 10, 11 nach außen weisen. Die Vorderradpacktasche 8 wird anschließend zwischen die über die Packsäcke 9 hinausragenden Anteile der oberen Beschläge 10 der Hinterradpacktaschen 4, 5 eingesetzt, wobei die konkave Seite 29 zu den Ösen 21 hin gerichtet ist. Beim Einsetzen der vorderen Packtasche 8 wird der Steg 32 des Einhängestückes 25 in die Einstecköffnung 42 eingesetzt und der Längserstreckung des Beschlages 10 folgend in den Einschiebeschlitz eingeschoben. Da auf diese Weise die Vorderradpacktasche 8 bereits zwischen den beiden oberen Beschlägen 10 fixiert ist, ist es zum Zusammenhalten des Rucksackes 84 lediglich notwendig, auf jeder Seite nur einen Schnellspanner (nicht dargestellt) vorzusehen, der in die aneinandergrenzenden Aussparungen 39 und 27 des oberen Beschlages 10 und des Verbindungswinkels 26 einsetzbar ist.

Sollen lediglich die drei Packtaschen 4, 5, 8 miteinander zu einem Rucksack zusammengesetzt werden, wird der Träger 12 in der oben in Fig. 11 gezeigten Weise zwischen die unteren Beschläge 11 der Hinterradpacktaschen 4, 5 eingesetzt und mit den Beschlägen 11 durch Schnellspanner verbunden.

Ist ein Rucksack aus den vier Packtaschen 4, 5, 7, 8 herzustellen, werden in einem nächsten Schritt die drei bereits miteinander verbundenen Packtaschen 4, 5, 8 umgedreht, so daß die Packtasche 8 zuunterst liegt. Zwischen die nun nach oben weisenden unteren Beschläge 11 wird in einer zur Montage der Vorderradpacktasche 8 analogen Weise die Vorderradpacktasche 7 eingesetzt und in den Ösen 21 Tragegurte (nicht dargestellt) befestigt.

Die konkaven Seiten 29 der Vorderradpacktaschen 7, 8 ragen über die zum Rücken des Radfahrers 2 weisenden Trageseiten der Hinterradpacktaschen 4, 5 hervor, damit beim Tragen des Rucksackes 84 nur eine relativ kleine Tragefläche unmittelbar am Rücken des Radfahrers 2 anliegt. Durch die somit möglich gewordene Luftzirkulation am Rücken des Radfahrers 2 erhöht sich der Tragekomfort des Rucksackes 84.

Es ist zweckmäßig, die Beschläge 10, 11 sowie die Verbindungswinkel 26 der Vorderradpacktasche 7, 8 und die Seitenteile 65, 67 des Trägers 12 mit jeweils gleicher Materialstärke zu fertigen, so daß Schnellspanner mit einem feststehenden Widerlager anstelle der Zweirippenmutter 74 Verwendung finden können. Auf diese Weise ist ein noch einfacheres Verbinden der Einzelteile ermöglicht.

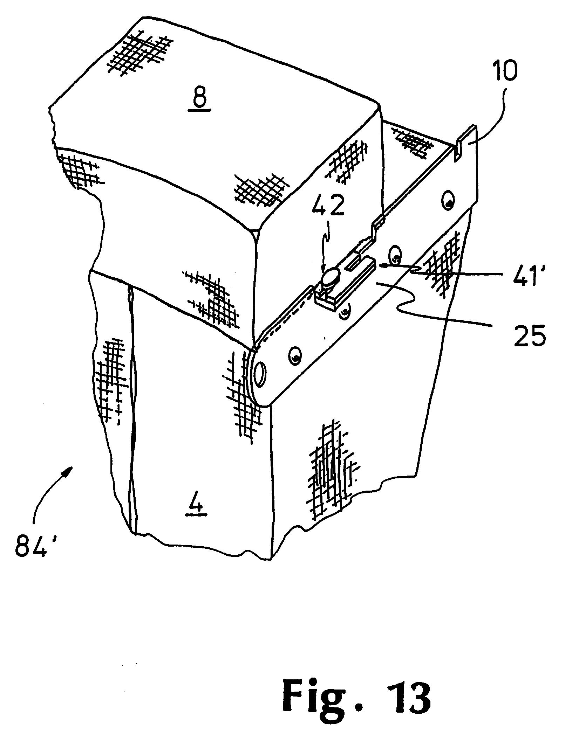

In Fig. 13 ist ein Ausschnitt eines Rucksackes 84' dargestellt, dessen Hinterradpacktaschen 4, 5 die abgewinkelten Aufnahmevorrichtungen 41' aufweisen. Die Montage des Rucksackes 84' ist gegenüber einer Montage des Rucksackes 84 noch rascher zu bewerkstelligen, insbesondere dann, wenn die entsprechenden Schnellspanner bereits an den Aufnahmevorrichtungen 41' angebracht sind. Zur Vereinfachung der Darstellung sind die Schnellspanner in Fig. 13 nicht abgebildet.

In dem Ausführungsbeispiel ist zur Erzielung einer hohen Stabilität mit der Maßgabe, das an dem Fahrrad zu befestigende Gewicht möglichst gering zu halten, die Rückwandverstärkung 46, die Beschläge 10, 11, 23, 24 und der Träger 12 aus einem kohlefaserverstärkten Kunststoff-Aluminium-Laminat hergestellt. Es ist vorteilhaft als Aluminiumkern eine wabenförmig strukturierte Aluminiumplatte zu verwenden, die beidseitig mit dem kohlefaserverstärkten Kunststoff beschichtet ist.

## Patentansprüche

1. Packtaschen (4, 5, 7, 8) mit Befestigungsvorrichtung für die alternative Fixierung der Packtaschen (4, 5, 7, 8) an einem Fahrrad (1) oder für die gegenseitige Fixierung der Packtaschen (4, 5, 7, 8) zur Zusammenstellung eines Rucksackes (81, 84) **dadurch gekennzeichnet**, daß die Packtaschen (4, 5, 7, 8) Verbindungselemente zum Verbinden der Packtaschen (4, 5, 7, 8) miteinander oder zum Einhängen oder Einspannen der Packtaschen (4, 5, 7, 8) an entsprechenden Gegenstücken des Fahrrades (1) aufweisen, wobei die Verbindungselemente an starren Beschlägen (10, 10' 11, 23, 24) vorgesehen sind, welche an den zum Fahrrad (1) weisenden Außenseiten der Packtaschen (4, 5, 7, 8) jeweils ans einer Rückwandversteifung (46) der Packtaschen (4, 5, 7, 8) befestigt sind.

2. Packtaschen nach Anspruch 1, dadurch gekennzeichnet, daß die Verbindungselemente entweder als Einhängeelemente (25) oder als Aufnahmevorrichtungen (41, 41') zur Aufnahme der Einhängeelemente (25) ausgebildet sind, wobei die Packtaschen (4, 5, 7, 8) jeweils paarweise mit Einhängeelement (25) aufweisenden Beschlägen (23, 24) oder mit Aufnahmevorrichtung (41, 41') aufweisenden Beschlägen (10, 10', 11) ausgerüstet sind.

3. Packtaschen nach Anspruch 1 oder 2, dadurch gekennzeichnet, daß die Einhängeelemente (25) durch einen von der Packtasche (7, 8) wegweisenden Steg (32) und einen im wesentlichen senkrecht zu diesem angeordneten Haltebügel (31) T-förmig ausgebildet sind.

4. Packtaschen nach einem der Ansprüche 1 bis 3, dadurch gekennzeichnet, daß die Aufnahmevorrichtungen (41) durch eine in einen Halteschlitz (43) mündende, randlich in den Beschlag (10, 11) eingebrachte Einstecköffnung (42) als L-förmige Ausnehmungen (41) ausgebildet sind.

5. Packtaschen nach Anspruch 3 oder 4, dadurch gekennzeichnet, daß die Höhe des Steges (32) eines Einhängeelementes (25) im wesentlichen der Materialstärke eines eine Aufnahmevorrichtung (41) aufweisenden Beschlages (10, 11) entspricht.

6. Packtaschen nach einem der Ansprüche 3 bis 5, dadurch gekennzeichnet, daß der Haltebügel (31) eines Einhängeelementes (25) im in die Aufnahmevorrichtung (41) eingesteckten Zustand über die Längserstreckung des Halteschlitzes (43) hinausragt.

7. Packtaschen nach einem der Ansprüche 2 bis 6, dadurch gekennzeichnet, daß die Aufnahmevorrichtungen (41') einen im wesentlichen rechtwinklig von der Rückwandverstärkung (46) wegweisenden Beschlagabschnitt aufweisen, in dem ein Eingängebolzen (53) und eine schwenkbare Schnellspannvorrichtung vorgesehen sind.

8. Packtaschen nach einem der Ansprüche 2 bis 7, dadurch gekennzeichnet, daß jeweils ein Einhängeelement (25) einem der Breite einer Packtasche (7, 8) entsprechenden Beschlag (23, 24) zugeordnet sowie mittig auf diesem angeordnet ist und über die Höhe des Packsackes (9) der Packtasche (7, 8) einen oberen Beschlag (23) und einen unteren Beschlag (24) aufweist.

9. Packtaschen nach einem der Ansprüche 2 bis 8, dadurch gekennzeichnet, daß die Einhängeelemente (25) aufweisenden Beschläge (23, 24) an Vorderradpacktaschen (7, 8) vorgesehen sind.

10. Packtaschen nach einem der Ansprüche 2 bis 9, dadurch gekennzeichnet, daß jeweils eine Aufnahmevorrichtung (41) einem der Breite einer Packtasche (4, 5,) entsprechenden Beschlag (10, 11) zugeordnet ist und über die Höhe des Packsackes (9) der Packtasche (4, 5) hinausragt, und daß eine Packtasche (4, 5) einen oberen Beschlag (10) und einen unteren Beschlag (11) aufweist, wobei die Aufnahmevorrichtungen (41) der beiden Beschläge (10, 11) spiegelsymmetrisch bezogen auf den Packtaschenquerschnitt zueinander angeordnet sind.

11. Packtaschen nach einem der Ansprüche 2 bis 10, dadurch gekennzeichnet, daß die Aufnahmevorrichtungen (41, 41') aufweisenden Beschläge (10, 11) an Hinterradpacktaschen (4, 5) vorgesehen sind.

12. Packtaschen nach Anspruch 9, dadurch gekennzeichnet, daß die Einhängeelemente (25) aufweisenden Vorderradpacktaschen (7, 8) mit einem an der Fahrradgabel befindlichen, einen Einhängebolzen (53) und eine Schnellspannvorrichtung aufweisenden Befestigungsstück (52) zusammenwirkend verbindbar sind.

13. Packtaschen nach Anspruch 9 oder 12, dadurch gekennzeichnet, daß eine Vorderradpacktasche (7, 8) über ein gabelförmiges Fixierstück (33) verfügt, daß mit einem an der Gabelscheide (51) vorgesehenen Fixierbolzen (57) zusammenwirkend verbindbar ist.

14. Packtaschen nach Anspruch 11, dadurch gekennzeichnet, daß die Aufnahmevorrichtungen (41, 41') aufweisenden Hinterradpacktaschen (4, 5) über einen dreigliedrigen Träger (12), dessen Einzelglieder (15, 61, 62) gelenkig verbunden sind, wobei die Länge des Tragestückes (61) im wesentlichen der doppelten Tiefe einer gefüllten Hinterradpacktasche (4, 5) entspricht, und über eine im Bereich der Hinterradnabe vorgesehene Schnellspannvorrichtung (19, 20) am Fahrrad (1) befestigbar sind.

## Claims

1. Bags (4, 5, 7, 8) with a fastening device for removably fastening the bags (4, 5, 7, 8) on a bicycle (1) or for fastening the bags (4, 5, 7, 8) together to compose a knapsack (81, 84), characterized in that the bags (4, 5, 7, 8) have fasteners for interconnecting the bags (4, 5, 7, 8) or for attaching or fitting the bags (4, 5, 7, 8) to companion parts of the bicycle (1), said fasteners being provided on rigid fittings (10, 10', 11, 23, 24) secured to the external bag surfaces facing the bicycle (1) and in each case to a rear wall reinforcement (46) of the bags (4, 5, 7, 8).

2. Bags as claimed in claim 1, characterized in that the fasteners take the form of either hanging elements (25) or reception devices (41, 41') for the hanging elements (25), the bags (4, 5, 7, 8) being furnished in pairs with fittings (23, 24) presenting hanging element (25) or with fittings (10, 10', 11) presenting reception device (41, 41').

3. Bags as claimed in claim 1 or claim 2, characterized in that the hanging elements (25) are formed in a T-shape by a web (32) pointing away from the bag (7, 8) and by a retainer (31) arranged substantially at right angles to said web.

4. Bags as claimed in any one of claims 1 to 3, characterized in that the reception devices (41) are formed as L-shaped recesses (41) by a socket (42) made in the periphery of the fitting (10, 11) and ending in a retaining slot (43).

5. Bags as claimed in claim 3 or claim 4, characterized in that the height of the web (32) of a hanging element (25) substantially corresponds to the thickness of a fitting (10, 11) having a reception device (41).

6. Bags as claimed in any one of claims 3 to 5, characterized in that in the condition inserted in the reception device (41), the retainer (31) of a hanging element (25) projects lengthwise beyond the retaining slot (43).

7. Bags as claimed in any one of claims 2 to 6, characterized in that the reception devices (41') have a fitting portion which is substantially 90° offset away from the rear wall reinforcement (46) and is provided with a pin (53) and a swivelling quick attachment means.

8. Bags as claimed in any one of claims 2 to 7, characterized in that one hanging element (25) is assigned to and is centrally arranged on each fitting (23, 24) corresponding to the width of a bag (7, 8) and projects vertically from the pouch (9) of the bag (7, 8), and that a bag (7, 8) has an upper fitting (23) and a lower fitting (24).

9. Bags as claimed in any one of claims 2 to 8, characterized in that the fittings (23, 24) presenting hanging elements (25) are provided on front wheel bags (7, 8).

10. Bags as claimed in any one of claims 2 to 9, characterized in that one reception device (41) is assigned to each fitting (10, 11) corresponding to the width of a bag (4, 5) and projects vertically from the pouch (9) of the bag (4, 5), and that a bag (4, 5) has an upper fitting (10) and a lower fitting (11), the mutual arrangement of the reception devices (41) of the two fittings (10, 11) being one of mirror symmetry related to the cross section of the bags.

11. Bags as claimed in any one of claims 2 to 10, characterized in that the fittings (10, 11) presenting reception devices (41, 41') are provided on rear wheel bags (4, 5).

12. Bags as claimed in claim 9, characterized in that the front wheel bags (7, 8) having hanging elements (25) are co-operatively connectable with a fastener (52) which is situated on the bicycle fork and has a pin (53) and a quick attachment means.

13. Bags as claimed in claim 9 or claim 12, characterized in that the front wheel bag (7, 8) has a forked locating member (33) cooperatively connectable to a locating pin provided on the fork blade (51).

14. Bags as claimed in claim 11, characterized in that the rear wheel bags (4, 5) having reception devices (41, 41') are adapted to be fastened to the bicycle (1) by way of a carrier (12) having three jointed members (15, 61, 62), wherein the length of the carrying piece (61) substantially corresponds to double the depth of a filled rear wheel bag (4, 5), and by way of a quick attachment means (19, 20) provided in the region of the rear wheel hub.

## Revendications

1. Sacoches (4. 5, 7. 8) pourvues d'un dispositif de fixation en vue de pouvoir au choix fixer les sacoches (4, 5, 7, 8) à une bicyclette (1) ou fixer les sacoches (4, 5, 7, 8) entre elles pour constituer un sac à dos (81, 84), caractérisées par le fait que les sacoches (4, 5, 7, 8) comportent des éléments de liaison pour relier entre elles les sacoches (4, 5, 7, 8) ou pour accrocher ou pour serrer les sacoches (4, 5, 7, 8) sur des pièces conjuguées correspondantes de la bicyclette (1), cependant que les éléments de liaison sont prévus sur des ferrures rigides (10, 10', 11, 23, 24) qui sont fixées chacune à un renforcement (46) de la paroi arrière des sacoches (4, 5, 7, 8) sur les côtés extérieurs des sacoches (4, 5, 7, 8) dirigés vers la bicyclette (1).

2. Sacoches selon la revendication 1, caractérisées par le fait que les éléments de liaison sont réalisés, soit sous la forme d'éléments d'accrochage (25), soit sous la forme de dispositifs formant logements (41, 41') destinés à recevoir les éléments d'accrochage (25), les sacoches (4, 5, 7, 8) étant équipées à chaque fois par paires de ferrures (23, 24) qui présentent un élément d'accrochage (25) ou de ferrures (10, 10', 11) qui présentent un dispositif formant logement (41, 41').

3. Sacoches selon la revendication 1 ou 2, caractérisées par le fait que les éléments d'accrochage (25) sont constitués par une patte (32) dirigée à l'opposé de la sacoche (7, 8) et par une traverse de retenue en forme de T (31) qui est pour l'essentiel perpendiculaire à cette patte.

4. Sacoches selon l'une des revendications 1 à 3, caractérisées par le fait que les dispositifs formant logements (41) sont constitués, sous la forme d'évidements en L (41), par une ouverture à enfoncement (42) qui débouche dans une fente de retenue (43) et qui est ménagée dans le bord de la ferrure (10, 11).

5. Sacoches selon la revendication 3 ou 4, caractérisées par le fait que la hauteur de la patte (32) d'un élément d'accrochage (25) correspond pour l'essentiel à l'épaisseur de la matière d'une ferrure (10, 11) qui présente un dispositif formant logement (41).

6. Sacoches selon lune des revendications 3 à 5, caractérisées par le fait que la traverse de retenue (31) d'un élément d'accrochage (25) fait saillie au-delà de l'étendue de la fente de retenue (43) dans le sens longitudinal lorsque le dispositif formant logement (41) est dans son état enfoncé.

7. Sacoches selon l'une des revendications 2 à 6, caractérisées par le fait que les dispositifs formant logements (41') présentent une partie de ferrure qui est dirigée à l'opposé du renforcement (46) de la paroi arrière, pour l'essentiel à angle droit, et dans laquelle sont prévus un boulon d'accrochage (53) et un dispositif de serrage rapide pivotant.

8. Sacoches selon l'une des revendications 2 à 7, caractérisées par le fait qu'un élément d'accrochage (25) est à chaque fois associé à une ferrure (23, 24) qui correspond à la largeur d une sacoche (7, 8), qu'il est disposé sur cette ferrure en son centre, et que la sacoche (7, 8) présente une ferrure supérieure (23) et une ferrure inférieure (24) sur la hauteur du sac (9) qui forme la sacoche.

9. Sacoches selon l'une des revendications 2 à 8, caractérisées par le fait que les ferrures (23, 24) qui présentent des éléments d'accrochage (25) sont prévues sur des sacoches de roue avant (7, 8).

10. Sacoches selon l'une des revendications 2 à 9, caractérisées par le fait qu'un dispositif formant logement (41) est à chaque fois associé à une ferrure (10, 11) qui correspond à la largeur d'une sacoche (4, 5), et qu'il fait saillie au-dessus de la hauteur du sac (9) qui forme la sacoche (4, 5), et par le fait qu'une sacoche (4, 5) présente une ferrure supérieure (10) et une ferrure inférieure (11), les dispositifs formant logements (41) des deux ferrures (10, 11) étant disposés symétriquement entre eux par rapport à la section transversale des sacoches.

11. Sacoches selon l'une des revendications 2 à 10, caractérisées par le fait que les ferrures (10: 11) qui présentent des dispositifs formant logements (41, 41') sont prévues sur des sacoches de roue arrière (4, 5).

12. Sacoches selon la revendication 9, caractérisées par le fait que les sacoches de roue avant (7, 8) qui présentent des éléments d'accrochage (25) peuvent être reliées en coopération à une pièce de fixation (52) qui se trouve sur la fourche de la bicyclette et qui présente un boulon d'accrochage (53) et un dispositif de serrage rapide.

13. Sacoches selon la revendication 9 ou 12, caractérisées par le fait qu'une sacoche de roue avant (7, 8) est pourvue d'une pièce de fixation en forme de fourche (33) qui peut être reliée en coopération à un boulon de fixation (57) prévu sur la lame de fourche (51).

14. Sacoches selon la revendication 11, caractérisées par le fait que les sacoches de roue arrière (4, 5) qui présentent des dispositifs formant logements (41, 41') sont reliées entre elles par l'intermédiaire d'un support (12) en trois parties dont les parties individuelles (15, 61, 62) sont articulées entre elles, la longueur de la partie porteuse (61) correspondant pour l'essentiel au double de la profondeur d'une sacoche de roue arrière remplie (4, 5), et qu'elles peuvent être fixées à la bicyclette (1) par l'intermédiaire d'un dispositif de serrage rapide (19, 20) qui est prévu dans la région du moyeu de la roue arrière.
